# EUROPEAN PATENT APPLICATION

(11) **EP 4 148 297 A1**
(43) Date of publication of application: **15.03.2023**
(21) Application number: 22195660.0
(22) Date of filing: 14.09.2022
(51) Int. Cl.: F16F 9/48, F16F 9/348, F16F 9/512, F16F 9/32

(54) **BYPASS PORT PISTON**

(30) Priority: 14.09.2021 US 202163244117 P; 13.09.2022 US 202217944106
(71) Applicant: Fox Factory, Inc., Duluth, GA 30097 (US)
(72) Inventor: Randall, Connor, Duluth, 30097 (US); Tong, Ivan, Duluth, 30097 (US); Lee, Justin, Duluth, 30097 (US)
(74) Representative: Greaves Brewster LLP

(57) **Abstract**

A bypass port piston comprising:
a main damping piston (108), wherein the main damping piston has a plurality of standard ports (102), wherein the main damping piston has at least one bypass port (218);
face shims (110, 112) disposed on at least one side of the main damping piston such that fluid flow through the plurality of standard ports (102) is restricted;
at least one check spring (220) coupled to the main damping piston (108);
at least one check shim (222) disposed to cover the at least one bypass port (218) and coupled to the at least one check spring (220), wherein the at least one check spring biases the at least one check shim toward an open position; and
a position sensitive spring (224) disposed to close the at least one check shim (222) as the main damping piston (108) is pressed against the position sensitive spring (224).

## Description

### CROSS-REFERENCE TO RELATED APPLICATIONS

This application claims priority from U.S. Provisional Patent Application No. 63/244,117 filed on September 14, 2021, and from U.S. Patent Application No. 17/944,106 filed on September 13, 2022.

### TECHNICAL FIELD

Some embodiments of the present invention relate to a bypass port piston, to a shock absorber comprising the bypass port piston and to a vehicle comprising the shock absorber.

### BACKGROUND

The term bottom out commonly refers to when a shock absorber reaches a fully compressed state while in a compression stroke, while the term top out commonly refers to when a shock absorber reaches a fully extended state while in a rebound stroke. Both bottoming out and topping out a shock absorber is not ideal, as the rider can experience discomfort and the shock can potentially be damaged.

Dead length refers to the length of the shock absorber that does not contribute to active damper travel. During situations with limited packaging space, it is ideal to eliminate as much dead length as possible.

### SUMMARY OF THE INVENTION

According to some embodiments there is provided a bypass port piston. The bypass port piston may comprise a main damping piston. The main damping piston may have a plurality of standard ports. The main damping piston may have at least one bypass port. The bypass port piston may have face shims disposed on at least one side of the main damping piston such that fluid flow through the plurality of standard ports is restricted. The bypass port piston may have at least one check spring coupled to the main damping piston. The bypass port piston may have at least one check shim disposed to cover the at least one bypass port and coupled to the at least one check spring. The at least one check spring may keep the at least one check shim in an open position (including biasing the at least one check shim toward an open position). The bypass port may comprise a position sensitive spring disposed to close the check shim as the main damping piston is pressed against the position sensitive spring.

In some embodiments instances of the at least one check spring may have different spring constants.

In some embodiments instances of the at least one check spring with a light spring constant will close during use as a result of a pressure differential.

In some embodiments, in use, said pressure differential is caused as fluid flow velocity increases through the at least one bypass port, whereby a lower pressure acts on a bottom face of the at least one check shim creating a force tending to oppose the at least one check spring. The light spring constant may be such that said force overcomes the at least one check spring when said pressure differential is sufficient.

In some embodiments instances of the at least one check spring with a stiff spring constant will close as a result of pressure from the position sensitive spring.

In some embodiments, in use, a pressure differential is caused as fluid flow velocity increases through the at least one bypass port, whereby a lower pressure acts on a bottom face of the at least one check shim creating a force tending to oppose the at least one check spring. The stiff spring constant may be such that the at least one check shim is not closed by said pressure differential and only by sufficient pressure from the position sensitive spring.

In some embodiments the at least one check spring may have a spring constant that allows said at least one check shim to partially close during use as a result of a pressure differential caused by fluid flow into said at least one bypass port.

In some embodiments the position sensitive spring may have a spring constant such that said partial closing of the at least one check shim is overridden and the at least one check shim closed by pressure from the position sensitive spring when said main damping piston is displaced sufficiently during use.

In some embodiments the face shims may restrict fluid flow through the at least one bypass port to a single direction.

In some embodiments a lift area may be disposed at an end of an instance of the at least one bypass port where the face shims are disposed.

In some embodiments, in said open position there may be a space between the at least one check shim and an opening of the at least one bypass port to permit fluid flow through the opening into the at least one bypass port.

In some embodiments, the bypass port piston may be used in a shock absorber for a vehicle, and the bypass port piston may provide an effect like an internal bypass.

In some embodiments, the bypass port piston may be adapted so that there are bypass ports that operate in both compression and rebound. For example, the aforementioned features of the bypass port piston may be adapted for operation in compression. The bypass port piston may comprise a corresponding set of features adapted to operate in the same way but in rebound. The corresponding set of features may comprise at least one rebound bypass port, at least one rebound check spring, at least one rebound check shim, and a rebound position sensitive spring.

According to some embodiments there is provided a shock absorber. The shock absorber may comprise a bypass port piston as set out above, or as described or as claimed anywhere herein. The shock absorber may comprise a damper and a spring with the bypass piston port disposed in said damper, for example to divide an internal space inside a damper cylinder into a compression portion and a rebound portion.

In some embodiments the shock absorber may be adapted for use with a vehicle between an unsprung portion of the vehicle and a sprung portion of the vehicle.

According to some embodiments there is provided a vehicle comprising at least one shock absorber as set out above, or as described or claimed anywhere herein.

According to some embodiments there is provided a bypass port piston. The bypass port piston may comprise a main damping piston. The main damping piston may have a plurality of standard ports. The main damping piston may have at least one bypass port. The bypass port piston may have face shims disposed on at least one side of the main damping piston such that fluid flow through the plurality of standard ports is restricted. The bypass port piston may have at least one check spring coupled to the main damping piston. Instances of the at least one check spring may have a light spring constant that may close as a result of a pressure differential. The bypass port piston may have at least one check shim disposed to cover the at least one bypass port and may be coupled to the at least one check spring. The at least one check spring may keep the at least one check shim in an open position (including biasing the at least one check shim toward an open position).

In some embodiments instances of the at least one check spring may have different spring constants.

In some embodiments the bypass port piston may comprise a position sensitive spring disposed to close the check shim as the main damping piston is pressed against the position sensitive spring.

In some embodiments instances of the at least one check spring with a stiff spring constant may close as a result of pressure from the position sensitive spring.

In some embodiments the face shims may restrict fluid flow through the at least one bypass port to a single direction.

In some embodiments a lift area may be disposed at an end of an instance of the at least one bypass port where the face shims are disposed.

According to some embodiments there is provided a shock absorber. The shock absorber may comprise a bypass port piston as set out above, or as described or as claimed anywhere herein. The shock absorber may comprise a damper and a spring with the bypass piston port disposed in said damper, for example to divide an internal space inside a damper cylinder into a compression portion and a rebound portion.

In some embodiments the shock absorber may be adapted for use with a vehicle between an unsprung portion of the vehicle and a sprung portion of the vehicle.

According to some embodiments there is provided a vehicle comprising at least one shock absorber as set out above, or as described or claimed anywhere herein.

According to some embodiments there is provided a bypass port piston. The bypass port piston may comprise a main damping piston. The main damping piston may have a plurality of standard ports. The main damping piston may have at least one bypass port. The bypass port piston may have face shims disposed on at least one side of the main damping piston such that fluid flow through the plurality of standard ports is restricted. The bypass port piston may have at least one position sensitive spring. The bypass port piston may have at least one ring attached to the position sensitive spring disposed to restrict bypass ports as the main damping piston is pressed against the ring.

According to some embodiments there is provided a shock absorber. The shock absorber may comprise a bypass port piston as set out above, or as described or as claimed anywhere herein. The shock absorber may comprise a damper and a spring with the bypass piston port disposed in said damper, for example to divide an internal space inside a damper cylinder into a compression portion and a rebound portion.

In some embodiments the shock absorber may be adapted for use with a vehicle between an unsprung portion of the vehicle and a sprung portion of the vehicle.

According to some embodiments there is provided a vehicle comprising at least one shock absorber as set out above, or as described or claimed anywhere herein.

According to some embodiments there is provided a shock absorber. The shock absorber may be adapted for use with a vehicle suspension, including between an unsprung portion of the vehicle and a sprung portion. The shock absorber may comprise a cylinder having a cylinder inner diameter. The shock absorber may comprise a rod. The shock absorber may comprise a main damping piston. The main damping piston may be coupled to the rod. The main damping piston may be configured for operation within the cylinder. The main damping piston may be configured to divide the cylinder into a compression chamber and a rebound chamber. The main damping piston may have a plurality of standard ports. The main damping piston may have at least one bypass port. There may be face shims disposed on at least one side of the main damping piston such that fluid flow through the plurality of standard ports is restricted. There may be at least one check spring coupled to the main damping piston. Instances of the at least one check spring with a light spring constant may be adapted to close as a result of a pressure differential. There may be at least one check shim disposed to cover the at least one bypass port and coupled to the at least one check spring. The at least one check spring may keep the at least one check shim in an open position (including biasing the at least one check shim toward the open position). There may be a position sensitive spring disposed to close the check shim as the main damping piston is pressed against the position sensitive spring.

In some embodiments instances of the at least one check spring have different spring constants.

In some embodiments instances of the at least one check spring with a stiff spring constant may close as a result of pressure from the position sensitive spring.

In some embodiments the face shims may restrict fluid flow through the at least one bypass port to a single direction.

In some embodiments a lift area may be disposed at an end of an instance of the at least one bypass port where the face shims are disposed.

In some embodiments the shock absorber may be adapted for use with a vehicle between an unsprung portion of the vehicle and a sprung portion of the vehicle.

According to some embodiments there is provided a vehicle comprising at least one shock absorber as set out above, or as described or claimed anywhere herein.

According to some embodiments there is provided a bypass port piston. The bypass port piston may comprise a main damping piston. The main damping piston may have a plurality of standard ports. The main damping piston may have at least one bypass port. The bypass port piston may comprise face shims disposed on at least one side of the main damping piston such that fluid flow through the plurality of standard ports is restricted. The bypass port piston may comprise at least one check shim disposed to cover the at least one bypass port and coupled to the main damping piston, wherein the at least one check shim is in an open position. The bypass port piston may comprise a position sensitive spring disposed to close the check shim as the main damping piston is pressed against the position sensitive spring.

According to some embodiments there is provided a shock absorber. The shock absorber may comprise a bypass port piston as set out above, or as described or as claimed anywhere herein. The shock absorber may comprise a damper and a spring with the bypass piston port disposed in said damper, for example to divide an internal space inside a damper cylinder into a compression portion and a rebound portion.

In some embodiments the shock absorber may be adapted for use with a vehicle between an unsprung portion of the vehicle and a sprung portion of the vehicle.

According to some embodiments there is provided a vehicle comprising at least one shock absorber as set out above, or as described or claimed anywhere herein.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

The accompanying drawings, which are incorporated in and form a part of this specification, illustrate embodiments of the present technology and, together with the description, serve to explain the principles of the present technology.
FIG. 1 shows a cross section view of a shock absorber on a plane where the standard ports can be seen.
FIG. 2 shows a cross section view of a shock absorber on a plane where the bypass ports can be seen.
FIG. 3 shows a cross section view of a shock absorber on a plane where spring force arrow and fluid force arrows can be seen.
FIG. 4 shows an embodiment where cross section view of a shock absorber with compression and rebound check shims on a plane where bypass ports can be seen.
FIG. 5 shows an embodiment where cross section view of a shock absorber with compression and rebound check shims on a plane where the standard ports can be seen.
FIG. 6 shows a cross section view of multi-step piston in a compressed state.
FIG. 7 shows a cut away view of a shock absorber where the multi-step piston can be seen in its extended state.
FIG. 8 shows a top perspective view of main piston, according to some embodiments.
FIG. 9 shows a bottom perspective view of main piston, according to some embodiments.
FIG. 10 shows a perspective view of a single step piston.

### DETAILED DESCRIPTION

The detailed description set forth below in connection with the appended drawings is intended as a description of various embodiments of the present invention and is not intended to represent the only embodiments in which the present invention is to be practiced. Each embodiment described in this disclosure is provided merely as an example or illustration of the present invention, and should not necessarily be construed as preferred or advantageous over other embodiments. In some instances, well known methods, procedures, and objects have not been described in detail as not to unnecessarily obscure aspects of the present disclosure.

Shock absorbers (e.g., dampers) are used in numerous different vehicles and configurations to absorb some or all of a movement that is received at a first portion of a vehicle before it is transmitted to a second portion of the vehicle. For example, when a wheel hits a pothole, the encounter will cause an impact force on the wheel. However, by utilizing suspension components including one or more dampers, the impact force can be significantly reduced or even absorbed completely before it is transmitted to a person on a seat of the vehicle.

Conventional damping components provide a constant damping rate during compression or extension through the entire length of the stroke. Other conventional damping components provide mechanisms for varying the damping rate. Further, in the world of bicycles, damping components are most prevalently mechanical. As various types of recreational and sporting vehicles continue to become more technologically advanced, what is needed in the art are improved techniques for varying the damping rate.

Typical shock absorbers consist of at least a cylinder with an inner diameter, a rod movably disposed within the cylinder, and a main damping piston coupled to the rod. The main damping piston is configured to divide the cylinder into a compression chamber and a rebound chamber.

Such shock absorbers may be monotube, or two concentric cylinders. The main damping piston may be vented or solid. Internal bypasses or external bypasses may also be present. Some shock absorbers have an external reservoir with a bladder or floating piston.

For additional detail and description of a shock absorber/damper, see, as an example, U.S. Patent 10,576,803 to which reference is specifically made. For additional detail and description of position-sensitive shock absorber/damper, see, as an example, U.S. Patent 6,296,092 to which reference is specifically made.

Additional information for vehicle suspension systems, sensors, and their components as well as adjustment, modification, and/or replacement aspects including manually, semi-actively, semi-actively, and/or actively controlled aspects and wired or wireless control thereof is provided in U.S. Patents 8,838,335; 9,353,818; 9,682,604; 9,797,467; 10,036,443; 10,415,662; to each of which reference is specifically made.

In one embodiment, instead of (or in addition to) restricting the flow through the orifice, the active valve can vary a flow rate through an inlet or outlet passage within the active valve, itself. In other words, the active valve, can be used to meter the working fluid flow (e.g., control the rate of working fluid flow) with/or without adjusting the flow rate through orifice. Additional information regarding active and semi-active valves, including those used for compression and/or rebound stiffness adjustments, preload adjustments, bottom-out control, preload adjustment, ride height adjustment, and the like see, as an example, U.S. Patent 9,353,818 and U.S. Patent 9,623,716 to each of which reference is specifically made.

Due to the active valve arrangement, a relatively small solenoid (using relatively low amounts of power) can generate relatively large damping forces. Furthermore, due to incompressible fluid inside the damping assembly, damping occurs as the distance between the cone shaped member and the orifice is reduced. The result is a controllable damping rate. Additional active and semi-active valve features are described and shown in U.S. Pat. Nos. 8,627,932; 8,857,580; 9,033,122; 9,120,362; and 9,239, to each of which reference is specifically made.

While the term bottom out will be used for the sake of clarity and brevity, it should be understood that embodiments herein pertain to both bottom out and top out prevention. In other words, while use in a compression stroke is used as the main example, embodiments are not limited to compression strokes and may also be used during rebound strokes.

Previous bottom out and top out prevention designs include mechanisms such as an internal bypass, bottom out cups, hydraulic top out, and negative springs. Such designs often have issues such as expensive manufacturing requirements, or too much dead length.

Embodiments herein have the benefit of cheaper manufacturing requirements, and less dead length than previous designs. Embodiments herein utilize bypass ports within the main damping piston of a shock absorber that simulate internal bypass shocks, without adding bleed to the system that can decrease performance. In some embodiments, these ports are typically open in the ride zone.

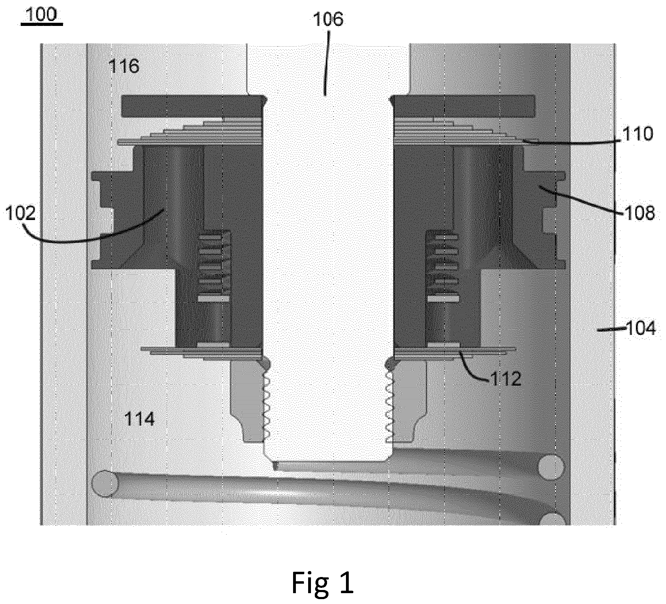

FIG. 1 shows a cross section view of a shock absorber 100 on a plane where the standard ports 102 can be seen. Shock absorber 100 also includes cylinder 104, shaft 106, main damping piston 108, compression face shims 110, rebound face shims 112, compression chamber 114, and rebound chamber 116.

Compression face shims 110 allow fluid to flow during a compression stroke, and block fluid flow during a rebound stroke. Rebound face shims 112 allow fluid to flow during a rebound stroke, and block fluid flow during a compression stroke. Main damping piston disposed around and coupled to shaft 106 (or rod 106), compression face shims 110, and rebound face shims 112. Main damping piston also acts to divide the cylinder 104 into a compression chamber 114 and a rebound chamber 116.

For additional detail and description of a main damping piston and shim stacks, see, as an example, U.S. Patent 8,869,959 to which reference is specifically made.

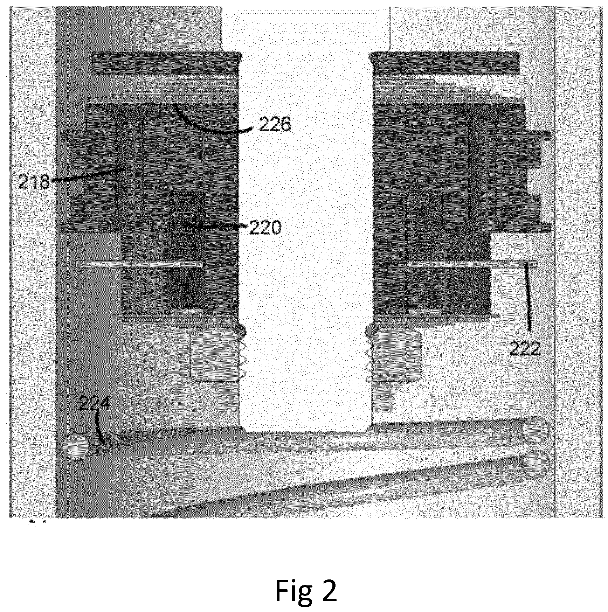

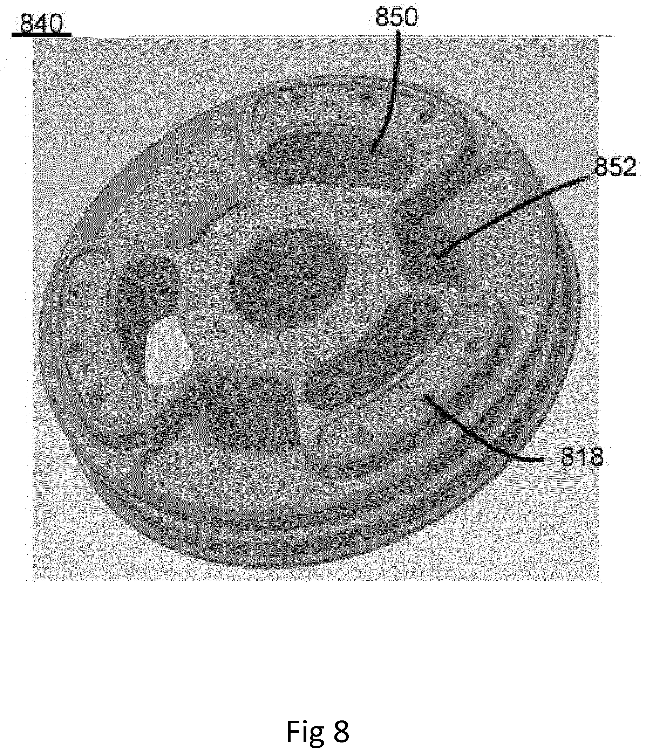

In some embodiments, main damping piston had a plurality of standard ports 102, and at least one bypass port. In some embodiments, the compression face shims 110 and rebound face shims 112 (which may be collectively referred to as face shims) are disposed on each side of the main damping piston 108 such that they restrict fluid flow through the standard ports. In some embodiments, the face shims are clover shaped such that they selectively restrict ports. In some embodiments, the standard ports 102 are staggered in height such that the face shims can be disks, but not restrict every port. Such an embodiment can be seen in at least FIG. 2 and FIG. 8.

In some embodiments, standard ports 102 are the ports where fluid is allowed to flow through on the compression stroke. In order for fluid to exit the standard ports 102, there needs to be enough fluid pressure to open compression face shims 110.

It should be understood that there are standard ports (not shown) of a similar structure on another plane of the main damping piston 108 that allow for fluid flow during a rebound stroke. These standard ports utilize the rebound face shims 112 instead of the compression face shims 110.

FIG. 2 shows a cross section view of a shock absorber 100 on a plane where the bypass ports 218 can be seen. Also included in FIG. 2 is check spring 220, bypass port check shim 222, and the primary position sensitive spring 224. Primary position sensitive spring 224 may also be referred to as position sensitive spring, or positional spring.

In some embodiments, bypass ports 218 are secondary ports that allow fluid to flow through the main damping piston 108 from the compression chamber 114 to the rebound chamber 116. Compression face shims 110 are used to cover the exit of the bypass ports 218 as well as the standard ports 102. Against the compression face shims 110, there is a lift area 226 of the bypass ports 218. The lift area allows for fluid pressure to build up against the compression face shims 110, such that the compression face shims 110 are more easily lifted. In some embodiments, only some bypass ports have a lift area 226. The size of lift area 226 can be changed to alter the ease with which the face shim is lifted. In some embodiments, at least one lift area is present against the rebound face shim 112.

In some embodiments, compression face shims 110 only cover standard ports 102 and not bypass ports 218, such that bypass ports 218 are bleed only ports. In some bleed only embodiments, face shims 110 and 112 are clover shaped such that the standard ports 102 are covered, and the bypass ports 218 are not. In some embodiments the compression face shims 110 are undersized such that the standard ports are covered and the bypass ports 218 are not. In some embodiments, the face shims restrict fluid flow through the at least one bypass port to a single direction. In some embodiments, a lift area is disposed at an end of an instance of the at least one bypass port where the face shims are disposed.

In some embodiments, bypass ports 218 and standard ports 102 are on different planes. In some embodiments, at least one bypass port 218 is on the same plane as at least one standard port 102. In some embodiments, bypass ports 218 are positioned further out on the radius of the main damping piston 108 than the standard ports 102. In some embodiments, the radial placement of the bypass ports 218 is used for tuning. In some embodiments, the diameter of bypass ports 218 is used for tuning.

As a bottom out prevention mechanism, check springs 220 and the bypass port check shim 222 are utilized. In some embodiments, check springs 220 keep the bypass port check shim 222 in a normally open position and allow for fluid flow.

In some embodiments, bypass port check shims 222 are position sensitive, and are closed using the position sensitive spring 224. In this embodiment, as the shock absorber 100 is compressed and the main damping piston 108 moves towards a bottom out position, the position sensitive spring 224 will come in contact with the bypass port check shim 222. At this point, the spring force from the position sensitive spring 224 will be greater than the opposing spring force of the check spring 220 and the bypass port check shim 222 will move to a closed position. Once closed, fluid can no longer flow through the bypass ports 218 but can still flow through the standard ports 102.

With the closing of the bypass ports 218, the damping force will increase and the shock absorber 100 will be less likely to bottom out.

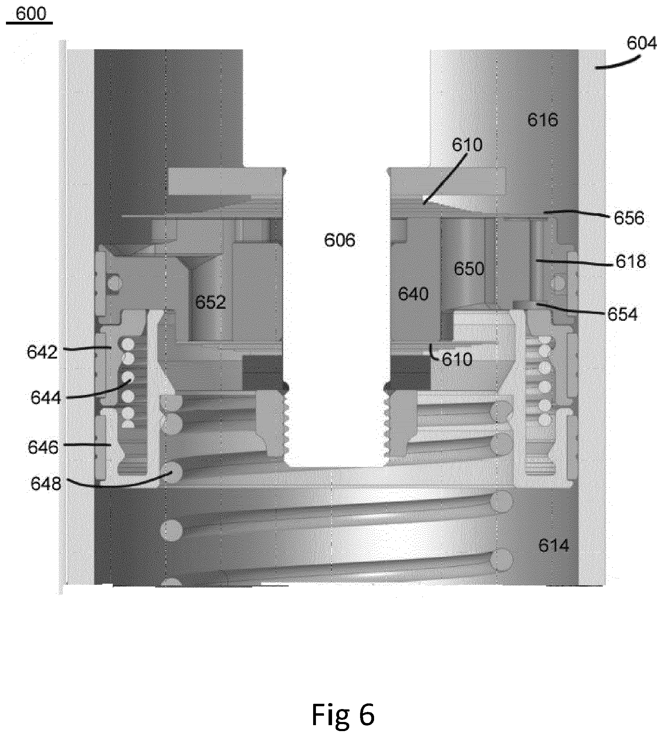

In some embodiments, the bypass port check shim 222 is not coupled to a check spring such as check spring 220. In some embodiments, the bypass port check shim is coupled to the main damping piston. In some embodiments, the bypass port check shim is coupled to the position sensitive spring. In some embodiments, such as those shown in at least FIG. 6, there are multiple check pistons (or check rings) that are coupled to springs similar to the position sensitive spring.

In some embodiments, bypass port check shims 222 are velocity sensitive. In velocity sensitive embodiments, a pressure drop is created as the fluid flow velocity increases through the bypass port 218 that acts on the face of bypass port check shim 222 that is against bypass port 218. The pressure drop then creates a force to oppose the check spring 220 and will close the bypass port check shim 222 when the pressure drop force is greater than the check spring 220 force. Once closed, fluid can no longer flow through the bypass ports 218 but can still flow through the standard ports 102.

In other words, during a compression stroke a high velocity flowrate through bypass ports 218 will cause a pressure drop where the pressure in the bypass port 218 and rebound chamber 116. Between the higher pressure in the compression chamber 114 and the lower pressure in the rebound chamber 116, the bypass port check shim 222 will close off fluid flow into the bypass port 218. While there is some closing force caused by the fluid flow itself, the primary closing force is from the pressure drop.

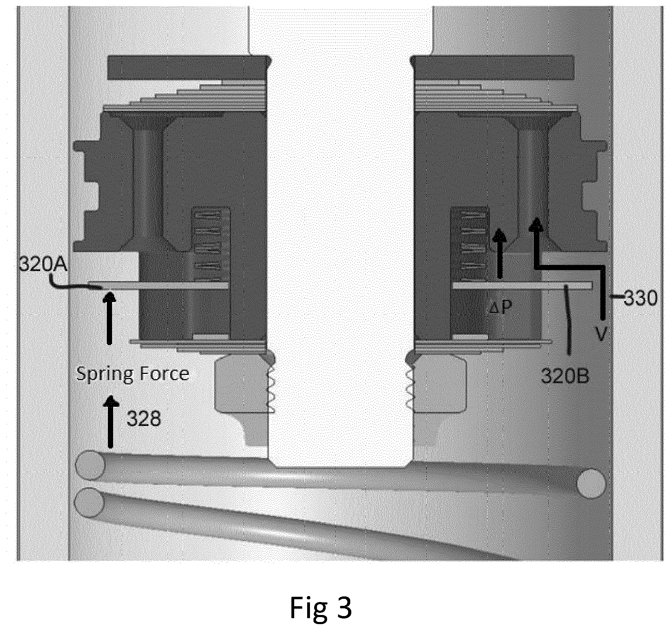

In some embodiments, there are both position sensitive and velocity sensitive bypass ports in the main damping piston 108. FIG. 3 shows a cross section view of a shock absorber 100 on a plane where spring force arrow 328 and fluid force arrows 330 can be seen.

Spring force arrow 328 shows one of the two visible bypass ports being a position sensitive port that will close when the spring force from the primary position sensitive spring 224 is greater than the spring force from the check spring 320A. Fluid flow arrow 330 shows the other of the two visible bypass ports being a velocity sensitive port that will close when the force from the pressure drop is greater than the force from check spring 320B.

In some embodiments, there is at least one bypass port that is closed by a position sensitive mechanism. In some embodiments, there is at least one bypass port that is closed by a velocity sensitive mechanism. In some embodiments, the position sensitive spring 224 may be removed, reducing overall dead length, such that only the velocity sensitive mechanism is present.

In embodiments with at least one position sensitive bypass port and at least one velocity sensitive bypass port, a higher performance system is made. In some cases, a very high velocity hit can increase damping at any point within the stroke (compression or rebound).

In position sensitive embodiments, the position sensitive spring 224 and the check spring 220 have a stiff spring constant. In velocity sensitive embodiments, check spring 220 has a light spring constant. In some embodiments, the check spring 220 is a wave spring. In some embodiments with both position and velocity sensitive features, multiple check springs are utilized for the separate features. In some embodiments with multiple check springs, the multiple check springs have different spring constants to accommodate for the position and velocity sensitive features.

In some embodiments with multiple check springs, the spring constants are tuned to allow different ports to close at different times. In some embodiments, the velocity sensitive bypass ports are tuned to close before the position sensitive bypass ports. In some embodiments, the position sensitive bypass ports are tuned to close before the velocity sensitive bypass ports.

For example, at least one velocity sensitive bypass port is tuned to close at a lower velocity than a second velocity sensitive bypass port. Continuing the example, a position sensitive bypass port may have a check spring with a spring constant that is higher than the previously mentioned velocity sensitive bypass ports.

In some embodiments, the free length of check spring 220 is altered to adjust when the bypass port check shims 222 close. The free length of check spring 220 may be used to adjust the close timing of both position and velocity sensitive bypass ports.

In some embodiments, position sensitive spring 224 is a conical spring. In this embodiment, the position sensitive spring 224 being conical would allow for a reduction of dead length as the spring would collapse in on itself and around the main damping piston 108.

In some embodiments, the thickness of the coils of position sensitive spring 224 is selected based on the application. In some embodiments, the number of coils of position sensitive spring 224 is selected based on the application. In some embodiments, the spring constant of position sensitive spring 224 is selected based on the application. In some embodiments, the length of position sensitive spring 224 is selected based on the application.

In some embodiments, position sensitive spring 224 is a rubber coated spring to assist in noise reduction. In some embodiments, an elastomeric bumper (not shown) is placed on the bottom out end to reduce noise.

In some embodiments, the bypass port check shim is a machined plate and fixed to the check spring such that it is not captured within the main damping piston 108. In some embodiments, bypass port check shim 222 is stamped or formed such that it has an upward bend (similar to a leaf spring). Such embodiments have the benefit of decreased costs. In some embodiments, bypass port check shim 222 is thicker to reduce bending.

In some embodiments, at least one check spring coupled to the main damping piston. In some embodiments, at least one check shim disposed to cover the at least one bypass port and coupled to the at least one check spring, wherein the at least one check spring keeps the at least one check shim in an open position. In some embodiments, instances of the at least one check spring have different spring constants. In some embodiments, instances of the at least one check spring with a light spring constant will close as a result of a pressure differential.

In some embodiments, there is a position sensitive spring disposed to close the check shim as the main damping piston is pressed against the position sensitive spring. In some embodiments, instances of the at least one check spring with a stiff spring constant will close as a result of pressure from the position sensitive spring.

It should be understood that there are standard ports of a similar structure on another plane of the main damping piston 108 that allow for fluid flow during a rebound stroke. These standard ports utilize the rebound face shims 112 instead of the compression face shims 110.

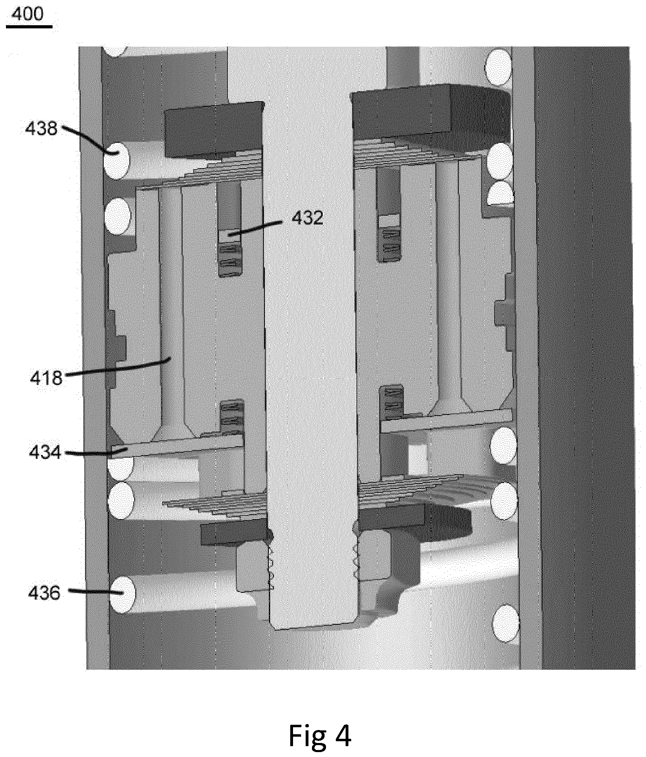

In some embodiments, there are bypass ports that act during a rebound stroke. It should be understood that the various embodiments discussed in terms of a compression stroke also apply to a configuration with rebound bypass ports such as that shown in at least FIG. 4.

FIG. 4 shows an embodiment where cross section view of a shock absorber 400 with compression and rebound check shims on a plane where bypass ports 418 can be seen. In FIG. 4, the compression bypass port check shims 434 are in a closed position. In this embodiment, compression bypass port check shims 434 as well as rebound bypass port check shims 432 can be seen. In position sensitive versions of such embodiments, there is also a compression position sensitive spring 436 and a rebound position sensitive spring 438.

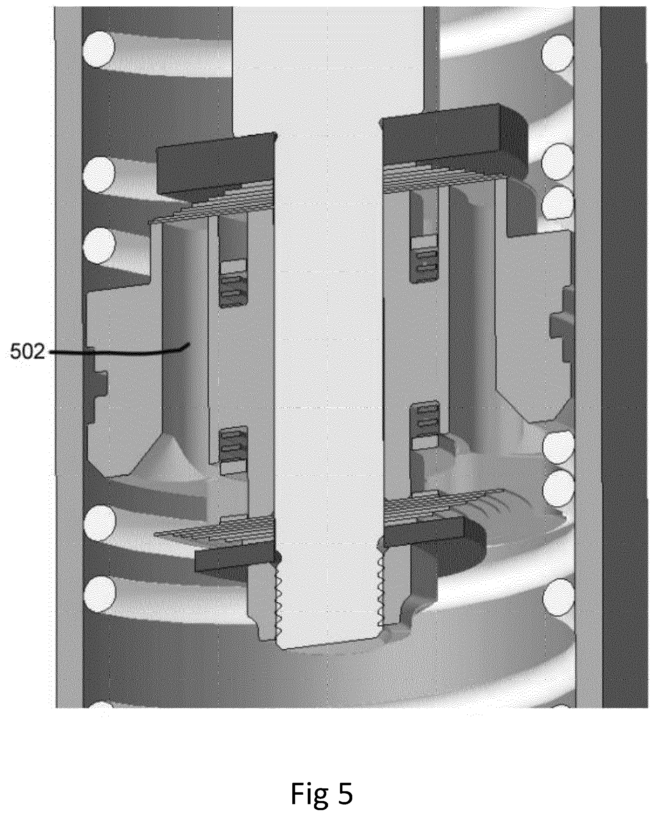

FIG. 5 shows an embodiment where cross section view of a shock absorber 400 with compression and rebound check shims on a plane where the standard ports 502 can be seen.

It should be understood that while discussed in terms of the position and velocity sensitive bypass ports belonging to a main damping piston, the embodiments are not limited to such a configuration. For example, in some embodiments the velocity sensitive features are instead placed on a base valve. A velocity sensitive port on a base valve would have the benefit of pressure balancing the shock, as well as aiding in cavitation prevention, and for control of unsprung wheel shake.

The available fluid volume within a damping chamber changes as the shaft moves in and out of the damping chamber in dampers that do not have a through shaft. For example, the maximum amount of working fluid which can be held within the damping chamber is limited by the shaft. In other words, when the shock assembly is completely compressed such that the shaft is taking up its maximum volume within the damping chamber, the remaining fluid volume can be filled with the working fluid. Therefore, when the shaft is at least partially withdrawn from the damping chamber, the reduction in shaft volume within the damping chamber results in an increase in the amount of available fluid volume within the damping chamber. In a most basic shock assembly, that space is filled with air. Deleteriously, during operation of the shock assembly the motion of the piston within the damping chamber can incorporate the air into the working fluid which is often referred to as emulsion. Basically, during emulsion, as the piston pushes on the working fluid, it also has to push the air bubbles out of the working fluid resulting in a reduced damping response.

This problem is often solved using a gas (such as Nitrogen) and an internal floating piston (IFP) to keep the working fluid separate from the gas. For example, in a pure monotube FOX shock the IFP is inline with the main body separating the working fluid from the gas. The problem with this is that it is usually a lower performance shock for several reasons such as, it requires higher gas pressure to prevent cavitation, it usually leads to higher dead lengths depending on the architecture, and it tends to not be pressure balanced. Therefore, the addition of a base valve is often included in this configuration for higher performance to reduce gas pressures, add variable damping, and prevent cavitation. In different embodiments, a base valve is similar to a piston in that it may have holes, shims and a jet in its center. Additionally, base valves can be comprised of electromechanical devices such as solenoids, motors, etc. Often, the base valve is fixed in the damping chamber, usually between the piston and the IFP to create a third chamber therein. Basically, during the compression stroke, the base valve allows the displacement of a volume of working fluid equal to the shaft volume entering the damping chamber, which moves the IFP. However, the base valve also maintains the resistance necessary to force working fluid through the piston. During the rebound stroke, the gas behind the IFP presses outward and working fluid is able to move through the base valve back into the compression chamber. Furthermore, base valves can operate in the rebound stroke, reverse to the compression operation.

As such, the base valve allows a decrease (or even elimination) of a pressure of the gas in the shock assembly. Moreover, the base valve prevents cavitation in the working fluid, but doesn't increase the force necessary to move the shaft. This allows the shock assembly to respond better at low shaft speeds, such as for example on a smoother surface, where the shaft isn't moving as quickly as it would if the vehicle were traversing a lot of bumps.

In some embodiments, a check spring such as check spring 220 is not coupled to the piston.

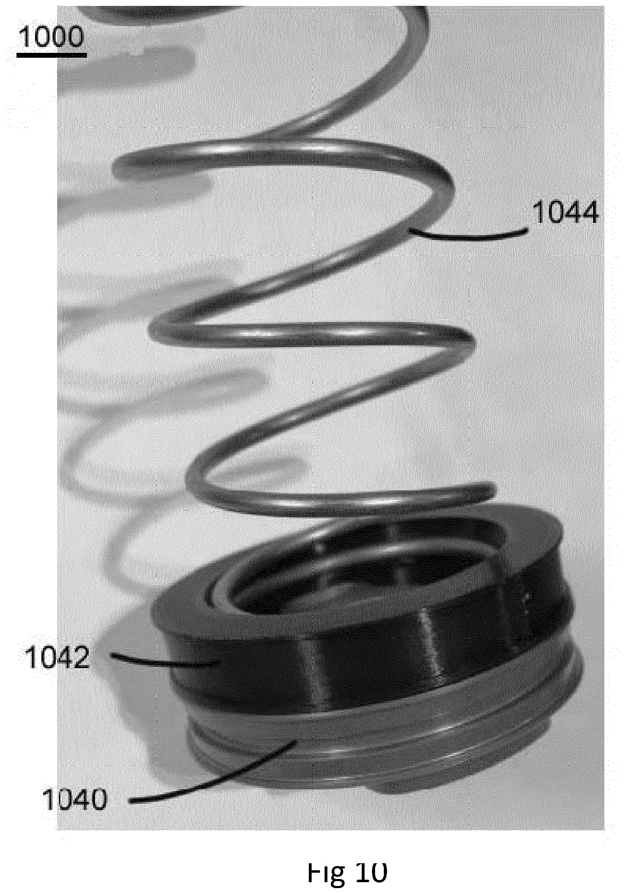

Embodiments such as the multi-step piston (shown in at least FIG. 6) or the single step piston (shown in at least FIG. 10) have one or more captured check piston (which may also be referred to as rings) coupled to one or more springs that are fixed to either the body cap, or an available fixture towards the upper portion of the shock.

In other words, in some embodiments the captured check shim required a spring to push it up off the bypass port (to where fluid is able to flow into the bypass port), whereas the check ring design is fixed to the springs fixed to the upper portion of the shock. Both types of embodiments can have some type of spring coupled to the piston to resist the check from closing, which adds velocity sensitivity, however it should be understood that it is not required.

FIG. 6 shows a cross section view of multi-step piston 600 in a compressed state. In some embodiments, the fully compressed state is at or near the end of a compression stroke. Multi step piston 600 is comprised of the main piston 640, first ring 642, first spring 644, second ring 646, and the second spring 648. Multi step piston fluidly divides a shock absorber into at least a compression chamber 614 and a rebound chamber 616 within cylinder 604. Main piston 640 is disposed on shaft 606.

In the plane shown, compression port 650, rebound port 652, bypass port 618, and face shims 610 can be seen. Recess 654 can be seen at the entrance to bypass port 618.

In some embodiments, a thin shim 656 is added to cover the bypass ports 618 such that fluid may only flow through during a compression stroke.

In some embodiments, during a fully compressed state multi step piston 600 functions similar to a regular main damping piston. In some embodiments, in a fully compressed state the first ring 642 and second ring 646 fully cover recess 654 such that fluid is unable to enter bypass port 618. With fluid unable to enter bypass port 618, the damping properties are increased such that the shock absorber is less likely to bottom out.

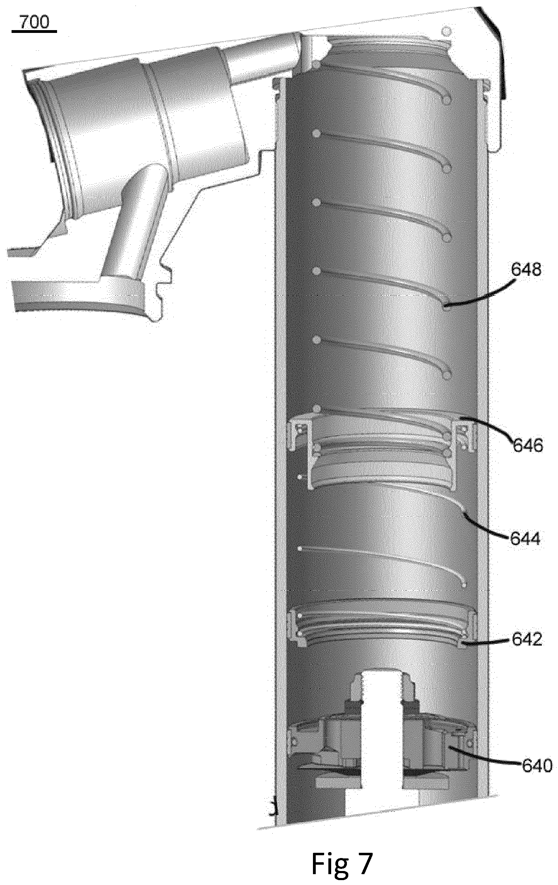

FIG. 7 shows a cut away view of a shock absorber 700 where the multi-step piston 600 can be seen in its extended state. As the shock absorber 700 is compressed, the main piston 640 will travel towards the first ring 642. When the main piston 640 and first ring 642 connect, a portion of recess 654 is blocked off and fluid flow through bypass port 618 is partially restricted.

As the shock absorber 700 continues to compress, the first spring 644 will start to compress. In some embodiments, first spring 644 holds first ring 642 in place. In some embodiments, the first spring 644 also assists in damping. Once the first spring 644 is fully compressed, the second ring 646 will then make contact with the main piston 640. As previously stated, recess 654, and in turn bypass port 618, is blocked off.

In some embodiments, second spring 648 is used to hold the second ring 646 in position. In some embodiments, second spring 648 has a higher spring constant than first spring 644, and assists in bottom out prevention.

In some embodiments, the thickness of the springs, number of coils, and the length of the spring are varied to have different damping properties. In some embodiments, the length of the first and second spring 644, 648 are varied to adjust when the bypass port 618 is partially and fully restricted.

In some embodiments, one or both of the first and second spring 644, 648 are rubber coated to assist in noise reduction. In some embodiments, one or both of the first and second ring 642, 646 are rubber coated to assist in noise reduction.

In some embodiments, the first and second spring 644, 648 are used to determine the ride zone and the bottom out zone. Aspects such as free length and spring constant may be adjusted to tune the zones.

FIG. 8 shows a top perspective view of main piston 840, according to some embodiments. In this embodiment, the top side is used to refer to the side facing the rebound chamber and bottom side is used to refer to the side facing the compression chamber. In this figure, compression ports 850, rebound ports 852, and bypass ports 818 can be seen.

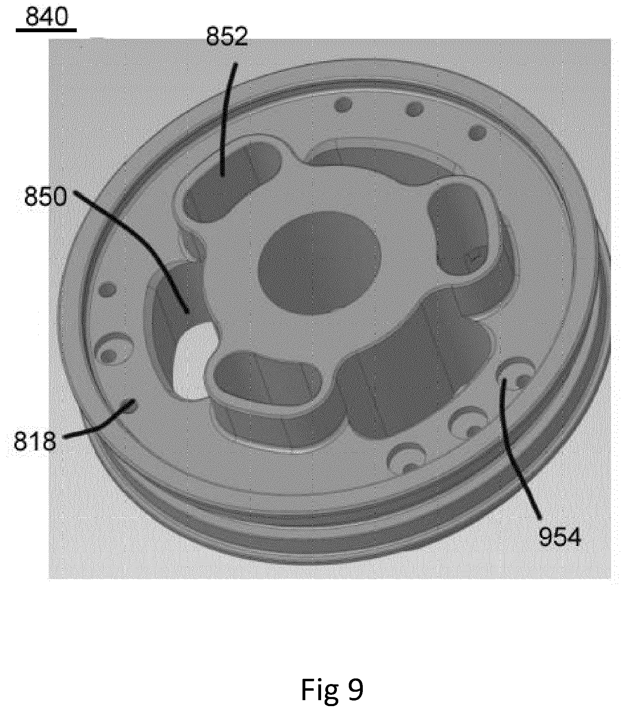

FIG. 9 shows a bottom perspective view of main piston 840, according to some embodiments. In this figure, compression ports 850, rebound ports 852, bypass ports 818, and recess 954 can be seen. As shown in at least FIG. 9, not every bypass port has a recess 954. In some embodiments, at least one bypass port has a recess 954.

In some embodiments, the diameter, placement, and number of recesses are changed to allow for fine tuning the main piston 840.

FIG. 10 shows a perspective view of a single step piston 1000. This embodiment is similar to the embodiment of at least Fig. 6, but instead has a single step instead of multiple. In this embodiment, ring 1042 is used to fully block fluid flow through the bypass ports of main piston 1040. In this embodiment, spring 1044 is tunable to adjust when in the compression stroke ring 1042 will make contact with main piston 1040.

The foregoing Description of Embodiments is not intended to be exhaustive or to limit the embodiments to the precise form described. Instead, example embodiments in this Description of Embodiments have been presented in order to enable persons of skill in the art to make and use embodiments of the described subject matter. Moreover, various embodiments have been described in various combinations. However, any two or more embodiments can be combined. Although some embodiments have been described in a language specific to structural features and/or methodological acts, it is to be understood that the subject matter defined in the appended claims is not necessarily limited to the specific features or acts described above. Rather, the specific features and acts described above are disclosed by way of illustration and as example forms of implementing the claims and their equivalents.

## Claims

1. A bypass port piston comprising:
a main damping piston, wherein the main damping piston has a plurality of standard ports, wherein the main damping piston has at least one bypass port;
face shims disposed on at least one side of the main damping piston such that fluid flow through the plurality of standard ports is restricted;
at least one check spring coupled to the main damping piston;
at least one check shim disposed to cover the at least one bypass port and coupled to the at least one check spring, wherein the at least one check spring biases the at least one check shim toward an open position; and
a position sensitive spring disposed to close the at least one check shim as the main damping piston is pressed against the position sensitive spring.

2. The bypass port piston of Claim 1, wherein instances of the at least one check spring have different spring constants.

3. The bypass port piston of Claim 1 or 2, wherein instances of the at least one check spring with a light spring constant allows the at least one check shim close during use as a result of a pressure differential.

4. The bypass port piston of Claim 3, wherein, in use, said pressure differential is caused as fluid flow velocity increases through the at least one bypass port, whereby a lower pressure acts on a bottom face of the at least one check shim creating a force tending to oppose the at least one check spring, and wherein said light spring constant is such that said force overcomes the at least one check spring when said pressure differential is sufficient.

5. The bypass port piston of Claim 1 or 2, wherein instances of the at least one check spring with a stiff spring constant will close during use as a result of pressure from the position sensitive spring.

6. The bypass port piston of Claim 5, wherein, in use, a pressure differential is caused as fluid flow velocity increases through the at least one bypass port, whereby a lower pressure acts on a bottom face of the at least one check shim creating a force tending to oppose the at least one check spring, and wherein said stiff spring constant is such that the at least one check shim is not closed by said pressure differential and only by sufficient pressure from the position sensitive spring.

7. The bypass port piston of Claim 1 or 2, wherein the at least one check spring has a spring constant that allows said at least one check shim to partially close during use as a result of a pressure differential caused by fluid flow into said at least one bypass port.

8. The bypass port piston of Claim 7, wherein said position sensitive spring has a spring constant such that said partial closing of the at least one check shim is overridden and the at least one check shim closed by pressure from the position sensitive spring when said main damping piston is displaced sufficiently during use.

9. The bypass port piston of any preceding Claim, wherein, in use, the face shims restrict fluid flow through the at least one bypass port to a single direction.

10. The bypass port piston of any preceding Claim, wherein a lift area is disposed at an end of an instance of the at least one bypass port where the face shims are disposed.

11. The bypass port piston of any preceding Claim, wherein in said open position there is a space between the at least one check shim and an opening of the at least one bypass port to permit fluid flow through the opening into the at least one bypass port.

12. The bypass port piston of any preceding Claim, wherein, in use in a shock absorber for a vehicle, the bypass port piston provides an effect like an internal bypass.

13. A shock absorber comprising a bypass port piston as claimed in any preceding Claim, optionally comprising a damper and a spring with the bypass piston port disposed in said damper.

14. A shock absorber as claimed in Claim 13, adapted for use with a vehicle between an unsprung portion of the vehicle and a sprung portion of the vehicle.

15. A vehicle comprising at least one shock absorber as claimed in Claim 13 or 14.
